# EUROPEAN PATENT SPECIFICATION

(11) **EP 4 649 698 B1**
(45) Date of publication and mention of the grant of the patent: **14.10.2026**
(21) Application number: 24703861.5
(22) Date of filing: 12.01.2024
(51) Int. Cl.: H04W 4/46, B61L 15/00, H04L 67/12

(54) **SYSTEM FOR DETERMINING THE PRESENCE OF A NON-OPERATIVE LOCAL CONTROL MEANS IN A CONVOY OF VEHICLES, AND CONVOY OF VEHICLES**
SYSTEM ZUR BESTIMMUNG DER ANWESENHEIT EINES NICHTOPERATIVEN LOKALEN STEUERMITTELS IN EINER KONVOI VON FAHRZEUGEN UND KONVOI VON FAHRZEUGEN
SYSTÈME POUR DÉTERMINER LA PRÉSENCE D'UN MOYEN DE COMMANDE LOCAL NON OPÉRATIONNEL DANS UN CONVOI DE VÉHICULES, ET CONVOI DE VÉHICULES

(30) Priority: 13.01.2023 IT 202300000396
(43) Date of publication of application: 19.11.2025
(73) Proprietor: Faiveley Transport Italia S.p.A., 10045 Piossasco (TO) (IT)
(72) Inventor: IMBERT, Luc, 10137 Torino (IT); GRASSO, Angelo, 14053 Canelli (Asti) (IT); TIONE, Roberto, 10121 Torino (IT); FREA, Matteo, 10060 Cantalupa (Torino) (IT)
(74) Representative: Cristinelli, Luca
(86) International application number: PCT/IB2024/050338
(87) International publication number: WO 2024/150192

(56) References cited:
- EP-A1- 1 031 488
- EP-A1- 2 213 545
- WO-A1-93/18933
- CENELEC-ACRI WORKSHOP: "ICT STANDARDISATION ON BOARD OF TRAINS ICT STANDARDISATION ON BOARD OF TRAINS An overview of current and upcoming standards presented during the CENELEC-ACRI Workshop: Information", 1 October 2011 (2011-10-01), XP055320903, Retrieved from the Internet <URL:http://www.integrail.info/ICT2011/1-2 Fadin - Overview of current and upcoming standards.pdf>

## Description

### Technical field

The present invention relates, in general, to the sector of the convoys of vehicles; in particular, the invention relates to a system for determining the presence of a non-operative local control means in a convoy of vehicles and to a convoy of vehicles.

### Prior art

Convoys of vehicles are usually composed of a plurality of interconnected vehicles.

It is well known that the vehicles that make up a convoy of vehicles are each equipped with a local control means to perform predetermined functions, e.g., control or communication functions.

In the known art, a verification is used to verify the number of local control means that are comprised in the various vehicles in the convoy, requiring the direct query of the various local control means. In other words, during such a query, a supervising control means of a vehicle in the convoy transmits a presence verification message to the local control means of the various vehicles. The local control means installed in the various vehicles are arranged to transmit, when they receive the presence verification message, respective presence confirmation messages to the supervising control means. The supervising control means may determine the number of local control means comprised in the convoy in light of the number of presence confirmation messages received.

Relevant prior art document EP2213545 relates to train configuration recognition that automatically recognizes a configuration of a train in which a plurality of railway carriages are joined together.

However, the aforesaid verification procedure has a significant drawback. Should one of the local control means of a vehicle in the convoy be non-operative (e.g., not powered or not functioning properly), it would not be able to transmit the presence confirmation message. In such a case, the supervising control means would determine the wrong number of local control means in the convoy. Therefore, the verification method just described in no way allows for the identification of any non-operative local control means in the vehicles.

### Summary of the invention

One object of the present invention is to provide a solution that identifies the presence of any non-operative local control means installed on board vehicles of a convoy.

The above and other objects and advantages are achieved, according to one aspect of the invention, by a system for determining the presence of a non-operative local control means in a convoy of vehicles having the features defined in claim 1 and by a convoy of vehicles having the features defined in claim 12. Preferred embodiments of the invention are defined in the dependent claims, the content of which is to be understood as an integral part of the present description.

### Brief description of the drawings

The functional and structural features of some preferred embodiments of a system for determining the presence of a non-operative local control means in a convoy of vehicles and of a convoy of vehicles according to the invention will now be described. Reference is made to the accompanying drawings, wherein:
- Fig. 1 illustrates a first embodiment of a system for determining the presence of a non-operative local control means in a convoy of vehicles;
- Fig. 2 illustrates a further embodiment of a system to determine the presence of a non-operative local control means in a convoy of vehicles;
- Fig. 3 illustrates a further embodiment of a system to determine the presence of a non-operative local control means in a convoy of vehicles;
- Fig. 4 illustrates a first exemplary case; and
- Fig. 5 illustrates a second exemplary case.

### Detailed description

Before explaining in detail a plurality of embodiments of the invention, it should be clarified that the invention is not limited in the application thereof to the design details and configuration of the components presented in the following description or shown in the drawings. The invention may assume other embodiments and be implemented or constructed in practice in different ways. It should also be understood that the phraseology and terminology have a descriptive purpose and should not be construed as limiting. The use of "include" and "comprise" and the variations thereof are intended to cover the elements set out below and the equivalents thereof, as well as additional elements and the equivalents thereof.

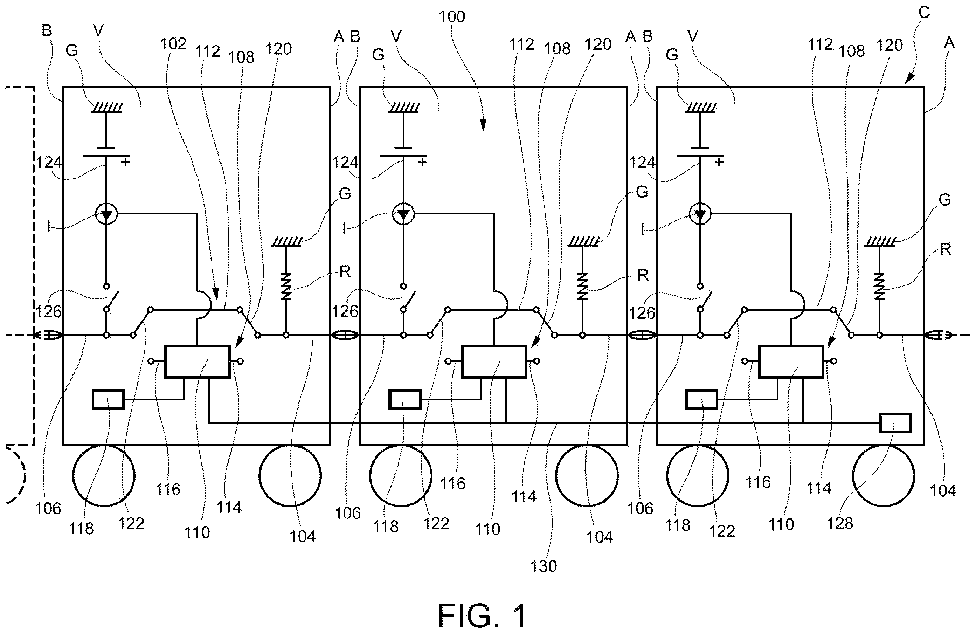

Referring initially to Fig. 1, the following describes a first embodiment of a system for determining the presence of a non-operative local control means in a convoy of vehicles comprising a plurality of vehicles, particularly in a railway convoy comprising a plurality of railway vehicles.

"Non-operative local control means" may refer to either an unpowered local control means or a damaged or malfunctioning local control means.

In particular, in the example in Fig. 1, the convoy of vehicles comprises three vehicles (one lead vehicle and two towed vehicles). However, the number and type of vehicles in the convoy may also be different (greater or lesser - towed or towing).

As observable in Fig. 1, the system for determining the presence of a non-operative local control means in a convoy of vehicles comprises a convoy communication line 102 installed in the vehicles of the convoy.

The convoy communication line 102 may be installed along all the vehicles that make up the convoy.

For each vehicle, the convoy communication line 102 comprises:
- a first line section 104 arranged to be associated with a first end A of a respective vehicle;
- a second line section 106 arranged to be associated with a second end B of said respective vehicle, opposite the first end A.

The second line section 106 of a vehicle is arranged to be connected in series with the first line section 104 of another vehicle.

For example, couplers may be used to connect the second line section 106 of one vehicle to the first line section 104 of another vehicle.

Between the first line section 104 and the second line section 106 of each respective vehicle, the convoy communication line 102 further comprises:
- a control line section 108 arranged to comprise a respective local control means 110;
- a bypass line section 112 arranged to be electrically arranged in parallel with the control line section 108.

The control line section of each respective vehicle comprises a third line section 114 and a fourth line section 116. The local control means 110 of each respective vehicle comprised in the respective control line section 108 is arranged to be connected to the third line section 114 and the fourth line section 116 of said respective vehicle, so that it faces the third line section on a first side (i.e, for example, on a first port or first terminal or first contact, input or output, of the local control means 110), and the fourth line section on a second side (i.e., on a second port or second terminal or second contact, input or output, of the local control means 110).

In other words, the local control means of a vehicle, is interposed between the third line section and the fourth line section of such vehicle.

For example, the third line section 114 and the fourth line section 116 of each respective vehicle may be galvanically isolated from each other.

For each respective vehicle, the convoy communication line 102 further comprises:
- a first switching means 120 and a second switching means 122.

The first switching means 120 is further arranged to:
- normally assume a first state in which it allows connection of the first line section 104 to the bypass line section 112 of said respective vehicle;
- assume a second state in which it allows connection of the first line section 104 to the third line section 114 of the control line section 108 of said respective vehicle.

The second switching means 122 is arranged to:
- normally assume a first state in which it allows connection of the second line section 106 to the bypass line section 112 of said respective vehicle;
- assume a second state in which it allows connection of the second line section 106 to the fourth line section 116 of the control line section 108 of said respective vehicle.

The system 100 comprises power supply means 118 arranged to provide a power supply to the respective local control means 110 installed in the vehicles.

The system 100 further comprises, for each respective vehicle:
- a resistive load R arranged to be connected to the first line section 104 of said respective vehicle of said plurality of vehicles and having a predetermined resistance value;
- an electrical power generation means 124 arranged to supply a predetermined voltage value to said second line section 106 of said respective vehicle;
- a third switching means 126.

For example, each resistive load R may be an electrical resistor having the predetermined resistance value (same resistance value for each resistive load).

For example, the resistive load R of a vehicle is arranged to be connected on one side to the first line section 104 of said respective vehicle of said plurality of vehicles and on a second side to a reference potential G.

As observable in Fig. 1, the third switching means 126 may be associated with said electrical power generation means 124 of said respective vehicle.

For example, the third switching means 126 of a vehicle is arranged to be interposed between the electrical power generation means 124 of such vehicle and the second line section 106 of such vehicle or between said electrical power generation means 124 of such vehicle and a reference potential (e.g., the same as the resistive load of such vehicle).

For example, the reference potential may be a ground or a reference potential having a predetermined reference value.

The third switching means 126 of each respective vehicle is arranged to:
- normally assume a first state in which it prevents the supply of the predetermined voltage value from the electrical power generation means 124 of said respective vehicle to the second line section 106 of said respective vehicle;
- assume a second state in which it allows supply of the predetermined voltage value from the electrical power generation means 124 of said respective vehicle to the second line section 106 of said respective vehicle.

For example, when the third switching means 126 is interposed between the electrical power generation means 124 and the second line section 106, it may prevent the supply of the predetermined voltage value from the electrical power generation means 124 to the second line section 106 by assuming an open condition that does not allow the connection of the measurement electrical power supply means 124 of said respective vehicle to the second line section 106 of said respective vehicle.

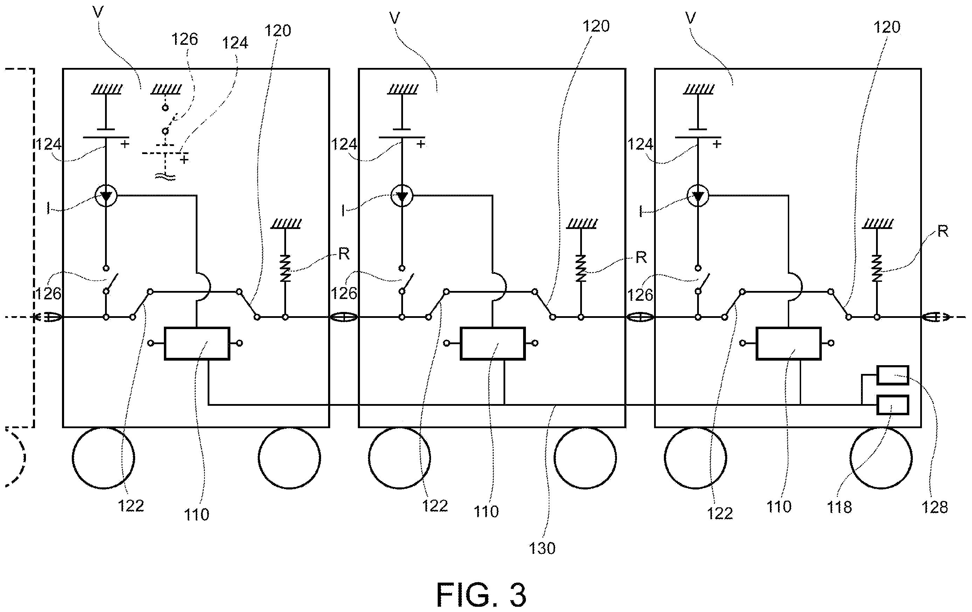

For example, when the third switching means 126 is interposed between the electrical power generation means 124 and the reference potential (as illustrated for example with a dashed line in Fig. 3), it may prevent the supply of the predetermined voltage value from the electrical power generation means 124 to the second line section 106 by assuming an open condition that does not allow the connection of the measurement electrical power supply means 124 of said respective vehicle to the reference potential.

For example, when the third switching means is in the second state, the electrical power generation means 124 of a vehicle may be connected on one side to the second line section 106 of said respective vehicle and on a second side to a reference potential (e.g., the same as the resistive load of such vehicle).

The system further comprises:
- an activation control means 128 arranged to be installed in a vehicle of said plurality of vehicles;
- an activation line 130 arranged to connect said activation control means 128 to the respective local control means 110 of the vehicles of the convoy.

The activation control means 128 is arranged to transmit an activation signal to the respective local control means 110 of the vehicles.

For example, the activation control means 128 may be installed in the lead vehicle of the convoy.

Each local control means installed in a respective vehicle, in response to receiving the activation signal and when powered by the power supply means, is arranged to:
- cause the first switching means 120 of said respective vehicle to assume the second state enabling the connection of the first line section 104 of said respective vehicle to the third line section 114 of said control line section 108 of said respective vehicle;
- cause the second switching means 122 of said respective vehicle to assume the second state which allows connection of the second line section 106 of said respective vehicle to the fourth line section 116 of said control line section 108 of said respective vehicle;
- cause the third switching means 126 of said respective vehicle to assume the second state that enables the supply of the predetermined voltage value from the electrical power generation means 124 of said respective vehicle to the second line section 106 of said respective vehicle;
- measure a current value I provided by the electrical power generation means 124 of said respective vehicle to said line second 106 of said respective vehicle;
- determine that at least the vehicle directly connected in series to the second line section 106 of said respective vehicle has a local control means 110 that is not operative, according to the measured current value, the predetermined voltage value provided by the electrical power generation means 124 of said respective vehicle and the predetermined resistance value of the resistive loads R.

For example, by knowing the measured current value, the predetermined voltage value provided by the electrical power generation means, and the predetermined resistance value of the resistive loads R, through appropriate formulas, the local control means of a respective vehicle may determine the fact that at least the vehicle directly connected in series to the second line section of said respective vehicle has a local control means that is either not powered or not properly operative. The formula(s) used may, for example, be based on Ohm's law. For example, the local control means of a respective vehicle, according to the measured current value, the predetermined voltage value provided by the electrical power generation means 124 of said respective vehicle, and the predetermined resistance value of the resistive loads R may determine a number of resistive loads that are connected to the second line section of said respective vehicle and base the determination on the fact that at least the vehicle directly connected in series to the second line section 106 of said respective vehicle has a local control means 110 that is non-operative on that number of resistive loads that are connected to the second line section of said respective vehicle.

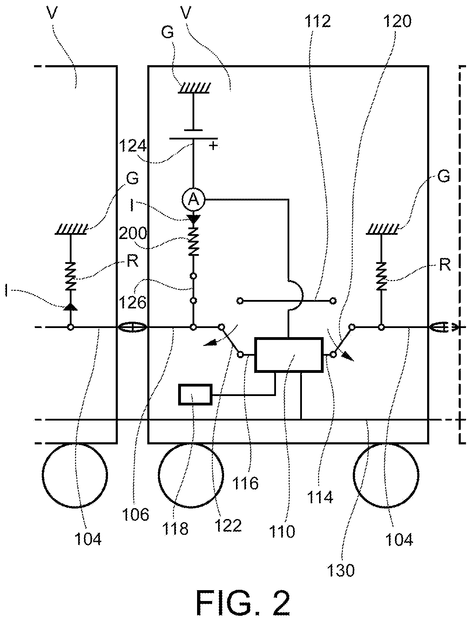

Preferably, as may be observed, for example, in Fig. 2, for each vehicle, a respective measurement resistive means 200 may be arranged between the electrical power generation means 124 and the second line section 106. In such a case, each local control means of a vehicle may measure the current supplied by the electrical power generation means 124 to said line second 106 of said respective vehicle by measuring the current flowing in the measurement resistive means 200.

In other words, the measurement resistive means may be, or perform the function of, a shunt resistor.

The current value may be measured, for example, by an Ammeter A.

Preferably, the resistive load R of a vehicle may be arranged to be connected to the communication line in parallel with respect to the resistive loads of other vehicles.

Preferably, as described above, the local control means of a respective vehicle may be arranged to determine a number of resistive loads that are connected to the second line section of said respective vehicle, according to the measured current value, the predetermined voltage value provided by the electrical power generation means 124 of said respective vehicle, and the predetermined resistance value of the resistive loads R.

Preferably, the local control means 110 of each respective vehicle may be arranged to determine that at least the vehicle directly connected in series to the second line section 106 of said respective vehicle has a local control means 110 that is not operative, when the measured current value I is indicative of the fact that at least two resistive loads R having said predetermined resistance value are connected to the second line section 106 of said respective vehicle.

For example, as described earlier, based on Ohm's law, it is possible to derive the number of resistive loads from a voltage value, a current value, and the resistance value of the resistive loads. For example, starting from the measured current value and the predetermined voltage value, a resulting resistance value may be determined. Knowing the predetermined resistance value of the resistive loads R, it is possible to determine the number of resistive loads R (e.g., connected in parallel) leading to the resulting resistance value derived from the measured current value and the predetermined voltage value. For example, when the resulting resistance value is substantially equal to the predetermined resistance value of one or more resistive loads in the system, the local control means of a vehicle may determine that the measured current is indicative of the fact that only one resistive load R is connected to the second line section of such vehicle. In another example, when the resulting resistance value is essentially half of the predetermined resistance value of one or more resistive loads in the system, the local control means of a vehicle may determine that the measured current is indicative of the fact that two resistive loads R are connected to the second line section of such vehicle (in parallel with each other).

Preferably, the local control means 110 of each respective vehicle may be arranged to determine how many vehicles connected in series to the second line section 106 of said respective vehicle have a local control means 110 that is not operative, according to the number of resistive loads R having said predetermined resistance value connected to the second line section 106 of said respective vehicle. The number of resistive loads R having the predetermined resistance value connected to the second electrical line section 106 of said respective vehicle may be determined according to the measured current value I, the predetermined voltage value provided by the electrical power generation means 124 of said respective vehicle, and the predetermined resistance value of the resistive loads R. The formula used may, for example, be based on Ohm's law, as exemplified above.

In other words, the measured current value may be indicative of the number of resistive loads connected to the second line section of a respective vehicle.

Preferably, the local control means 110 of each respective vehicle may be arranged to transmit an alarm message or signal to the activation control means 128 when it determines that at least one vehicle connected in series to the second line section 106 of said respective vehicle has a local control means 110 that is not operative.

The activation control means 128 may in turn be arranged to forward the alarm signal to a signaling means arranged to be installed on board a vehicle and to generate an alarm signal when it receives said alarm signal from the activation control means (or directly from a local control means). For example, the signaling means may be a visual signaling means, such as a warning light or a display, or the signaling means may be an audible signaling means, such as a siren. For example, the signaling means may be installed in the driver's cab so that it may immediately indicate the presence of a non-operative local control means.

In addition or alternatively, preferably, the local control means 110 of each respective vehicle may be arranged to transmit an alarm message or signal to a control means remote from the convoy of vehicles.

For example, the remote control means may be arranged in a remote control station suitable for managing and verifying the proper operation of the convoy.

Preferably, the convoy communication line may be a single-pair Ethernet line.

Preferably, the local control means of each respective vehicle may transmit or receive the messages or signals passed on the convoy communication line.

Preferably, the local control means of each respective vehicle may be arranged to be connected to the convoy communication line so that they are connected in series with each other.

In this way, the messages/signals may be transmitted in series along the convoy electric between the various local control means.

Preferably, the convoy communication line 102 may be redundant.

Preferably, the local control means 110 of each respective vehicle may comprise or be associated with a signal or message transceiver means. The means of transceiving signals or messages may comprise:
- a first communication port P1 arranged to be connected to the first line section 104 of a respective vehicle; and
- a second communication port P2 arranged to be connected to the second line section 106 of said respective vehicle.

Preferably, the resistive load R of each respective vehicle and/or the electrical power generation means 124 of each respective vehicle may be included in a respective fretting circuit. The term "fretting" refers to the corrosion wear of charged surfaces in contact that undergo small oscillatory movements tangential to the surface. The fretting circuit is a circuit designed to prevent such wear and tear.

Preferably, the power means 118 arranged to provide a power supply to the local control means installed in the respective vehicles comprise:
- (as, for example, observable in Fig. 3) a single power source 118 arranged to supply power to all local control means of the vehicles in the convoy; and/or
- (as observable in Fig. 1) a plurality of local power sources 118, wherein each local power source is arranged to be installed in a respective vehicle and to supply power to the local control means 110 installed in said respective vehicle.

As for example observable in Fig. 3, the power supply line may coincide with the activation line 130 (e.g., electrical activation line). In such a case, this power supply line may be used by the activation control means to transmit the activation signal to the various local control means.

For example, local power sources may be or comprise at least one battery. For example, the single power source may be a power supply system (such as a pantograph system) arranged to draw electrical power from an external source, such as an overhead power line.

In one example, the power supply means arranged to supply a predetermined voltage value to the local control means installed in the respective vehicles may comprise both the single power source and the plurality of local power sources. In this example, the single power source may also be used to power/charge the plurality of local power sources.

Preferably, the activation control means and/or each local control means, may each be or comprise at least one processor, microprocessor, control, microcontroller, PLC, FPGA, or the like.

Preferably, the resistive loads R of the vehicles may be connected to their respective first line sections, or to the reference potential, by an additional switching means. The additional switching means is arranged to:
- normally assume a first state in which it does not allow the resistive load of said respective vehicle to be connected to the first line section of said respective vehicle, or to the reference potential;
- assume a second state in which it allows connection of the resistive load to the second line section of said respective vehicle, or to the reference potential.

In such a case, each respective local control means of a vehicle may be arranged to bring the additional switching means into its second state in response to receiving the activation signal. Moreover, each respective local control means of a vehicle may be arranged to return the additional switching means to its first state subsequent to such local control means performing the current measurement.

Furthermore, each respective local control means of a vehicle may be arranged to return the third switching means to its first state subsequent to the current measurement by such local control means. In this way, the electrical power generation means 124 may be disconnected from the communication line after having taken the current measurement.

Returning the third switching means and/or the additional switching means to the first state reduces the overall power consumption of the system.

Preferably, each local control means installed in a respective vehicle is arranged to determine that the vehicle on which said respective local control means is installed is a tail vehicle when the measured current value I is zero.

Preferably, each switching means may be, for example, a switch, a controlled switch, a selector switch, etc.

In the following, some exemplifying cases are provided.

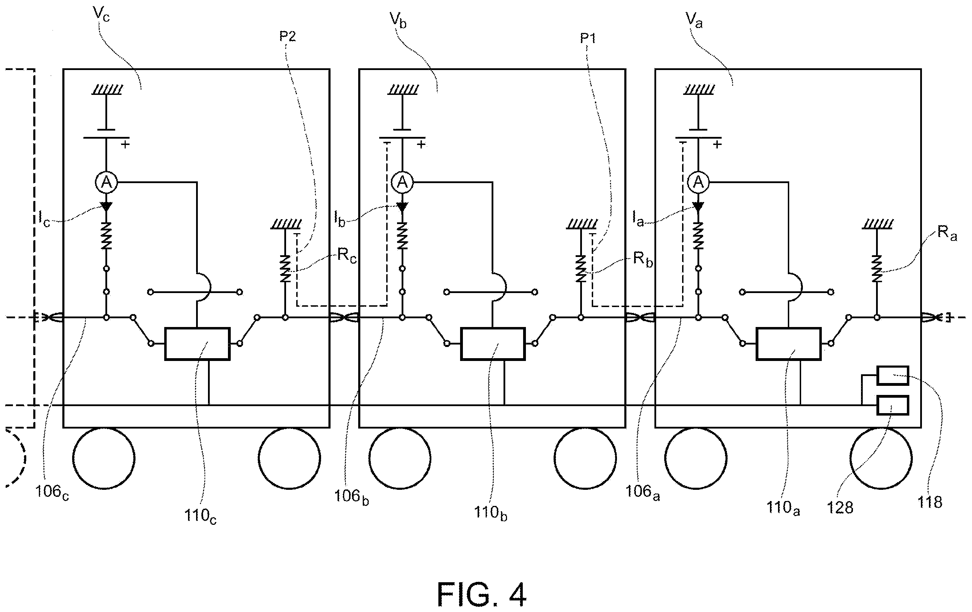

In a first case, illustrated in Fig. 4, the convoy comprises three vehicles Va, Vb, Vc. As observable in said Fig. 4, all local control means 110a, 110b, 110c, are operative and, following the receipt of the activation signal, have brought their respective first switching means, second switching means, and third switching means into their respective second states.

As may be observed in Fig. 4, the local control means 110a of the vehicle Va will measure the current value Ia supplied by the electrical power generation means 124a to the second line section 106a. In such a case, the local control means 110a may determine that the local control means 110b of the vehicle Vb connected directly to the second line section 106a of the vehicle Va is operative, according to the fact that, knowing the predetermined resistance value of the resistive loads, the measured current Ia, and the voltage value provided by the electrical power generation means 124a, the local control means 110a may determine that only one resistive load (Rb) is connected to the second line section 106a. The path of the current Ia is indicated by the dashed line P1. As may be seen in said Fig. 4, the local control means 110b of the vehicle Vb separates the third line section of the vehicle Vb from the fourth line section of the vehicle Vb, whereby the current Ia is not affected by the load Rc of the vehicle Vc.

The local control means 110b of the vehicle Vb will measure the current value Ib supplied by the electrical power generation means 124b to the second line section 106b. In such a case, the local control means 110b may determine that the local control means 110c of the vehicle Vc connected directly to the second line section 106b of the vehicle Vb is operative, according to the fact that, knowing the predetermined resistance value of the resistive loads, the measured current Ib, and the voltage value provided by the electrical power generation means 124b, the local control means 110b may determine that only one resistive load (Rc) is connected to the second line section 106b. The path of the current Ib is indicated by the dashed line P2.

The above explanation may apply similarly to any subsequent vehicles Vc, ....

If operative, the local control means of an additional vehicle (additional vehicle shown by the dashed line) connected directly to the second line section 106c of the vehicle Vc would separate the third line section of the additional vehicle from the fourth line section of the additional vehicle, whereby the current Ic would not be affected by any resistive load of the additional vehicle.

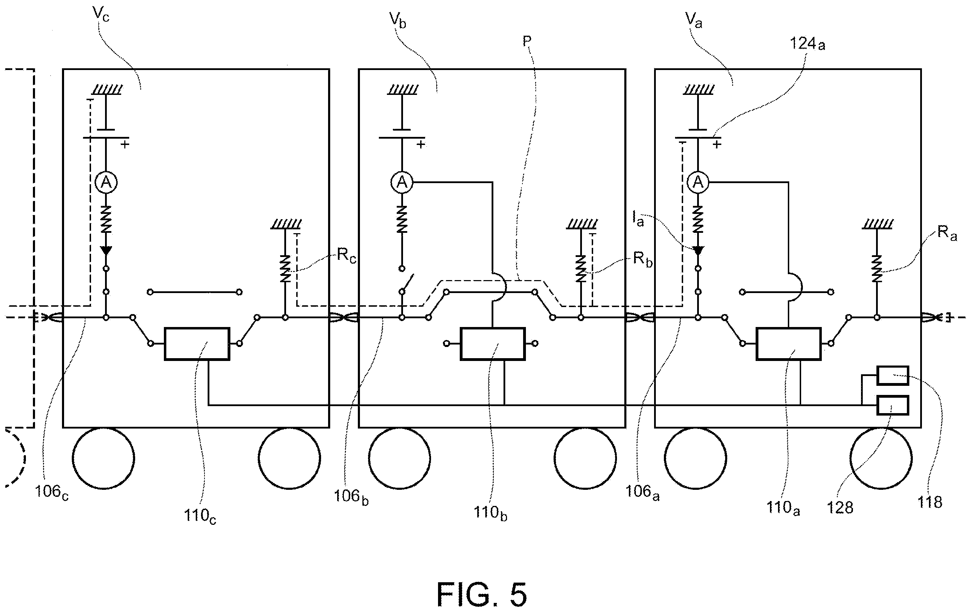

In a second case, illustrated in Fig. 5, the convoy comprises three vehicles Va, Vb, Vc. As may be observed in said Fig. 5, the local control means of the vehicles Va and Vc are operative and, following the receipt of the activation signal, have brought their respective first switching means, second switching means, and third switching means into their respective second states.

Conversely, the local control means of the vehicle Vb is not operative and upon receiving the activation signal has not brought the respective first switching means, the respective second switching means, and the respective third switching means into their second states.

As observable in Fig. 5, the local control means 110a of the first vehicle Va will measure a current value Ia supplied by the electrical power generation means 124a to said line second 106a of the first vehicle Va. In such a case, the local control means 110a may determine that the local control means 110b of the second vehicle Vb is not operative according to the fact that, knowing the predetermined resistance value of the resistive loads, the measured current Ia and the voltage value provided by the electrical power generation means 124, it may determine that two resistive loads (Ra and Rb) are connected, in parallel, to the second line section 106a of the vehicle Va.

The path of the current Ia is indicated by the dashed line P in Fig. 5. As may be seen in said Fig. 5, the local control means 110c of the vehicle Vc separates the third line section of the vehicle Vc from the fourth line section of the vehicle Vc, whereby the current Ia is not affected by the load Rc of the vehicle Vc.

Since the local control means 110c of the vehicle Vc is operative, it will be able to perform the verification for at least one subsequent vehicle, if any.

In a further aspect, the present invention relates to a convoy of vehicles comprising:
- a plurality of vehicles;
- a system for determining the presence of a non-operative local control means in a convoy of vehicles according to any of the embodiments described above.

As described above, the convoy may be a railway convoy composed of a plurality of railway vehicles. For example, one vehicle may be a locomotive vehicle and the other vehicles may be towed vehicles.

Moreover, nowadays, freight convoys also feature technological solutions based on the digitization of the convoy. Therefore, the present invention is also applicable in the field of freight convoys comprising one or more freight cars.

Furthermore, the present invention is applicable to any type of convoy, which comprises a plurality of vehicles, such as road convoys.

The advantage achieved by the present invention is to identify the presence of any non-operative local control means installed on board a convoy.

Various aspects and embodiments of a system for determining the presence of a non-operative local control means in a convoy of vehicles comprising a plurality of vehicles and a convoy of vehicles according to the invention have been described. It is understood that each embodiment may be combined with any other embodiment. Moreover, the invention is not limited to the embodiments described, but may be varied within the scope defined by the appended claims.

## Claims

1. System (100) for determining the presence of a non-operative local control means in a convoy of vehicles (C) comprising a plurality of vehicles (V), particularly in a railway convoy comprising a plurality of railway vehicles;
wherein, said system (100) comprises a convoy communication line (102) installed in said vehicles of the convoy;
said convoy communication line (102), for each vehicle, comprises:
- a first line section (104) arranged to be associated with a first end (A) of a respective vehicle;
- a second line section (106) arranged to be associated with a second end (B) of said respective vehicle, opposite to said first end (A);
wherein, the second line section (106) of a vehicle is arranged to be connected in series to the first line section (104) of another vehicle;
between said first line section (104) and said second line section (106) of each respective vehicle, said convoy communication line (102) comprises:
- a control line section (108) arranged to comprise a respective local control means (110);
- a bypass line section (112) arranged to be electrically arranged in parallel with said control line section (108);
wherein said control line section of each respective vehicle comprises a third line section (114) and a fourth line section (116); the local control means (110) of each respective vehicle comprised in the control line section (108) is arranged to be connected to the third line section (114) and to the fourth line section (116) of said respective vehicle, so that it faces the third line section on a first side and said fourth line section on a second side;
for each respective vehicle, said convoy communication line (102) further comprises:
- a first switching means (120) and a second switching means (122);
wherein said first switching means (120) is arranged to:
- normally assume a first state in which it allows connection of the first line section (104) to the bypass line section (112) of said respective vehicle;
- assume a second state in which it allows connection of the first line section (104) to the third line section (114) of said control line section (108) of said respective vehicle;
wherein said second switching means (122) is arranged to:
- normally assume a first state in which it allows connection of the second line section (106) to the bypass line section (112) of said respective vehicle;
- assume a second state in which it allows connection of the second line section (106) to the fourth line section (116) of said control line section (108) of said respective vehicle;
wherein the system (100) comprises power supply means (118) arranged to provide a power supply to the respective local control means (110) installed in the vehicles;
the system (100) further comprising, for each respective vehicle:
- a resistive load (R) arranged to be connected to the first line section (104) of said respective vehicle and having a predetermined resistance value;
- an electrical power generation means (124) arranged to provide a predetermined voltage value to said second line section (106) of said respective vehicle;
- a third switching means (126);
the third switching means (126) of each respective vehicle being arranged to:
- normally assume a first state in which it prevents the supply of the predetermined voltage value from the electrical power generation means (124) of said respective vehicle to the second line section (106) of said respective vehicle;
- assume a second state in which it allows supply of the predetermined voltage value from the electrical power generation means (124) of said respective vehicle to the second line section (106) of said respective vehicle;
the system (100) further comprising:
- an activation control means (128) arranged to be installed in a vehicle of said plurality of vehicles;
- an activation line (130) arranged for connecting said activation control means (128) to the respective local control means (110) of the vehicles of the convoy;
the activation control means (128) being arranged for transmitting an activation signal to the respective local control means (110) of the vehicles;
each local control means installed in a respective vehicle, in response to receiving the activation signal and when powered by the power supply means, is arranged to:
- cause the first switching means (120) of said respective vehicle to assume the second state enabling connection of the first line section (104) of said respective vehicle to the third line section (114) of said control line section (108) of said respective vehicle;
- cause the second switching means (122) of said respective vehicle to assume the second state which allows connection of the second line section (106) of said respective vehicle to the fourth line section (116) of said control line section (108) of said respective vehicle
- cause the third switching means (122) of said respective vehicle to assume the second state enabling the supply of the predetermined voltage value from the electrical power generation means (124) to the second line section (106) of said respective vehicle;
- measure a current value (I) provided by the electrical power generation means (124) to said second line section (106) of said respective vehicle;
- determine that at least the vehicle directly connected in series to the second line section (106) of said respective vehicle has a local control means (110) which is not operative, according to the measured current value, the predetermined voltage value provided by the electrical power generation means (124) of said respective vehicle and the predetermined resistance value of the resistive loads (R).

2. System according to claim 1, wherein the local control means (110) of each respective vehicle is arranged to determine that at least the vehicle directly connected in series to the second line section (106) of said respective vehicle has a local control means (110) that is not operative, when the measured current value (I) is indicative of the fact that at least two resistive loads (R) having said predetermined resistance value are connected to the second line section (106) of said respective vehicle.

3. System according to claim 1 or 2, wherein the local control means (110) of each respective vehicle is arranged to determine how many vehicles connected in series to the second line section (106) of said respective vehicle have a local control means (110) that is not operative, according to the number of resistive loads (R) having said predetermined resistance value connected to the second line section (106) of said respective vehicle;
the number of resistive loads (R) having said predetermined resistance value connected to the second electrical line section (106) of said respective vehicle being determined as a function of the measured current value (I), the predetermined voltage value provided by the electrical power generation means (124) of said respective vehicle and the predetermined resistance value of the resistive loads (R).

4. System according to any one of the preceding claims, wherein the local control means (110) of each respective vehicle is arranged to transmit an alarm message or alarm signal to the activation control means (128) when it determines that at least one vehicle connected in series to the second line section (106) of said respective vehicle has a local control means (110) that is not operative.

5. System according to any one of the preceding claims, wherein the local control means (110) of each respective vehicle is arranged to transmit an alarm message or alarm signal to a control means remote from the convoy of vehicles.

6. System according to any one of the preceding claims, wherein said convoy communication line is a single-pair Ethernet line.

7. System according to any one of the preceding claims, wherein said convoy communication line (102) is redundant.

8. System according to any one of the preceding claims, wherein the local control means (110) of each respective vehicle comprises or is associated with a signal or message transceiving means;
said signal or message transceiving means comprising:
- a first communication port P1 arranged to be connected to the first line section (104) of a respective vehicle; and
- a second communication port P2 arranged to be connected to the second line section (106) of said respective vehicle.

9. System according to any one of the preceding claims, wherein the resistive load (R) of each respective vehicle and/or the electrical power generation means (124) of each respective vehicle are included in a respective fretting circuit.

10. System according to any one of the preceding claims, wherein the power supply means (118) arranged to provide a power supply to the local control means installed in the respective vehicles comprises:
- a single power source arranged to supply power to all local control means of the vehicles in the convoy; and/or
- a plurality of local power sources, wherein each local power source is arranged to be installed in a respective vehicle and to supply power to the local control means (110) installed in said respective vehicle.

11. System (100) according to any one of the preceding claims, wherein each local control means installed in a respective vehicle is arranged to:
- determine that the vehicle on which said respective local control means is installed is a tail vehicle when the measured current value (I) is zero.

12. Convoy of vehicles comprising:
- a plurality of vehicles;
- a system (100) for determining the presence of a non-operative local control means in a convoy of vehicles according to any one of the preceding claims.

## Patentansprüche

1. System (100) zur Bestimmung der Anwesenheit eines nichtoperativen lokalen Steuermittels in einem Konvoi von Fahrzeugen (C), der eine Vielzahl von Fahrzeugen (V) umfasst, insbesondere in einem Eisenbahnkonvoi, der eine Vielzahl von Eisenbahnfahrzeugen umfasst;
wobei das System (100) eine Konvoi-Kommunikationsleitung (102) umfasst, die in den genannten Fahrzeugen des Konvois installiert ist;
wobei die Konvoi-Kommunikationsleitung (102) für jedes Fahrzeug umfasst:
- einen ersten Leitungsabschnitt (104), der dazu eingerichtet ist, einem ersten Ende (A) eines jeweiligen Fahrzeugs zugeordnet zu werden;
- einen zweiten Leitungsabschnitt (106), der dazu eingerichtet ist, einem zweiten Ende (B) des jeweiligen Fahrzeugs zugeordnet zu werden, das dem ersten Ende (A) gegenüberliegt;
wobei der zweite Leitungsabschnitt (106) eines Fahrzeugs dazu eingerichtet ist, in Reihe mit dem ersten Leitungsabschnitt (104) eines anderen Fahrzeugs verbunden zu werden;
wobei die Konvoi-Kommunikationsleitung (102) zwischen dem ersten Leitungsabschnitt (104) und dem zweiten Leitungsabschnitt (106) jedes jeweiligen Fahrzeugs umfasst:
- einen Steuerleitungsabschnitt (108), der dazu eingerichtet ist, ein jeweiliges lokales Steuermittel (110) zu umfassen;
- einen Bypassleitungsabschnitt (112), der dazu eingerichtet ist, elektrisch parallel zu dem Steuerleitungsabschnitt (108) angeordnet zu sein;
wobei der Steuerleitungsabschnitt jedes jeweiligen Fahrzeugs einen dritten Leitungsabschnitt (114) und einen vierten Leitungsabschnitt (116) umfasst; das im Steuerleitungsabschnitt (108) enthaltene lokale Steuermittel (110) jedes jeweiligen Fahrzeugs ist dazu eingerichtet, mit dem dritten Leitungsabschnitt (114) und dem vierten Leitungsabschnitt (116) des jeweiligen Fahrzeugs verbunden zu werden, sodass es dem dritten Leitungsabschnitt auf einer ersten Seite und dem vierten Leitungsabschnitt auf einer zweiten Seite zugewandt ist;
wobei die Konvoi-Kommunikationsleitung (102) für jedes jeweilige Fahrzeug ferner umfasst:
- ein erstes Schaltmittel (120) und ein zweites Schaltmittel (122);
wobei das erste Schaltmittel (120) dazu eingerichtet ist:
- normalerweise einen ersten Zustand einzunehmen, in dem es eine Verbindung des ersten Leitungsabschnitts (104) mit dem Bypassleitungsabschnitt (112) des jeweiligen Fahrzeugs ermöglicht;
- einen zweiten Zustand einzunehmen, in dem es eine Verbindung des ersten Leitungsabschnitts (104) mit dem dritten Leitungsabschnitt (114) des Steuerleitungsabschnitts (108) des jeweiligen Fahrzeugs ermöglicht;
wobei das zweite Schaltmittel (122) dazu eingerichtet ist:
- normalerweise einen ersten Zustand einzunehmen, in dem es eine Verbindung des zweiten Leitungsabschnitts (106) mit dem Bypassleitungsabschnitt (112) des jeweiligen Fahrzeugs ermöglicht;
- einen zweiten Zustand einzunehmen, in dem es eine Verbindung des zweiten Leitungsabschnitts (106) mit dem vierten Leitungsabschnitt (116) des Steuerleitungsabschnitts (108) des jeweiligen Fahrzeugs ermöglicht;
wobei das System (100) Stromversorgungsmittel (118) umfasst, die dazu eingerichtet sind, die jeweiligen in den Fahrzeugen installierten lokalen Steuermittel (110) mit elektrischer Energie zu versorgen;
wobei das System (100) ferner für jedes jeweilige Fahrzeug umfasst:
- eine Widerstandslast (R), die dazu eingerichtet ist, mit dem ersten Leitungsabschnitt (104) des jeweiligen Fahrzeugs verbunden zu werden, und einen vorbestimmten Widerstandswert aufweist;
- ein elektrisches Stromerzeugungsmittel (124), das dazu eingerichtet ist, dem zweiten Leitungsabschnitt (106) des jeweiligen Fahrzeugs einen vorbestimmten Spannungswert bereitzustellen;
- ein drittes Schaltmittel (126);
wobei das dritte Schaltmittel (126) jedes jeweiligen Fahrzeugs dazu eingerichtet ist:
- normalerweise einen ersten Zustand einzunehmen, in dem es die Bereitstellung des vorbestimmten Spannungswerts von dem elektrischen Stromerzeugungsmittel (124) des jeweiligen Fahrzeugs an den zweiten Leitungsabschnitt (106) des jeweiligen Fahrzeugs verhindert;
- einen zweiten Zustand einzunehmen, in dem es die Bereitstellung des vorbestimmten Spannungswerts von dem elektrischen Stromerzeugungsmittel (124) des jeweiligen Fahrzeugs an den zweiten Leitungsabschnitt (106) des jeweiligen Fahrzeugs ermöglicht;
wobei das System (100) ferner umfasst:
- ein Aktivierungssteuermittel (128), das dazu eingerichtet ist, in einem Fahrzeug der Vielzahl von Fahrzeugen installiert zu werden;
- eine Aktivierungsleitung (130), die dazu eingerichtet ist, das Aktivierungssteuermittel (128) mit den jeweiligen lokalen Steuermitteln (110) der Fahrzeuge des Konvois zu verbinden;
wobei das Aktivierungssteuermittel (128) dazu eingerichtet ist, ein Aktivierungssignal an die jeweiligen lokalen Steuermittel (110) der Fahrzeuge zu übertragen;
wobei jedes in einem jeweiligen Fahrzeug installierte lokale Steuermittel als Reaktion auf den Empfang des Aktivierungssignals und bei Versorgung durch die Stromversorgungsmittel dazu eingerichtet ist:
- zu bewirken, dass das erste Schaltmittel (120) des jeweiligen Fahrzeugs den zweiten Zustand einnimmt, der eine Verbindung des ersten Leitungsabschnitts (104) des jeweiligen Fahrzeugs mit dem dritten Leitungsabschnitt (114) des Steuerleitungsabschnitts (108) des jeweiligen Fahrzeugs ermöglicht;
- zu bewirken, dass das zweite Schaltmittel (122) des jeweiligen Fahrzeugs den zweiten Zustand einnimmt, der eine Verbindung des zweiten Leitungsabschnitts (106) des jeweiligen Fahrzeugs mit dem vierten Leitungsabschnitt (116) des Steuerleitungsabschnitts (108) des jeweiligen Fahrzeugs ermöglicht;
- zu bewirken, dass das dritte Schaltmittel (126) des jeweiligen Fahrzeugs den zweiten Zustand einnimmt, der die Bereitstellung des vorbestimmten Spannungswerts von dem elektrischen Stromerzeugungsmittel (124) an den zweiten Leitungsabschnitt (106) des jeweiligen Fahrzeugs ermöglicht;
- einen Stromwert (I) zu messen, der von dem elektrischen Stromerzeugungsmittel (124) an den zweiten Leitungsabschnitt (106) des jeweiligen Fahrzeugs bereitgestellt wird;
- zu bestimmen, dass zumindest das Fahrzeug, das unmittelbar in Reihe mit dem zweiten Leitungsabschnitt (106) des jeweiligen Fahrzeugs verbunden ist, ein lokales Steuermittel (110) aufweist, das nicht operativ ist, anhand des gemessenen Stromwerts, des von dem elektrischen Stromerzeugungsmittel (124) des jeweiligen Fahrzeugs bereitgestellten vorbestimmten Spannungswerts und des vorbestimmten Widerstandswerts der Widerstandslasten (R).

2. System nach Anspruch 1, wobei das lokale Steuermittel (110) jedes jeweiligen Fahrzeugs dazu eingerichtet ist, zu bestimmen, dass zumindest das Fahrzeug, das unmittelbar in Reihe mit dem zweiten Leitungsabschnitt (106) des jeweiligen Fahrzeugs verbunden ist, ein lokales Steuermittel (110) aufweist, das nicht operativ ist, wenn der gemessene Stromwert (I) darauf hinweist, dass zumindest zwei Widerstandslasten (R), die den genannten vorbestimmten Widerstandswert aufweisen, mit dem zweiten Leitungsabschnitt (106) des jeweiligen Fahrzeugs verbunden sind.

3. System nach Anspruch 1 oder 2, wobei das lokale Steuermittel (110) jedes jeweiligen Fahrzeugs dazu eingerichtet ist, zu bestimmen, wie viele Fahrzeuge, die in Reihe mit dem zweiten Leitungsabschnitt (106) des jeweiligen Fahrzeugs verbunden sind, ein lokales Steuermittel (110) aufweisen, das nicht operativ ist, anhand der Anzahl der Widerstandslasten (R), die den genannten vorbestimmten Widerstandswert aufweisen und mit dem zweiten Leitungsabschnitt (106) des jeweiligen Fahrzeugs verbunden sind;
wobei die Anzahl der Widerstandslasten (R), die den genannten vorbestimmten Widerstandswert aufweisen und mit dem zweiten elektrischen Leitungsabschnitt (106) des jeweiligen Fahrzeugs verbunden sind, in Abhängigkeit von dem gemessenen Stromwert (I), dem von dem elektrischen Stromerzeugungsmittel (124) des jeweiligen Fahrzeugs bereitgestellten vorbestimmten Spannungswert und dem vorbestimmten Widerstandswert der Widerstandslasten (R) bestimmt wird.

4. System nach einem der vorhergehenden Ansprüche, wobei das lokale Steuermittel (110) jedes jeweiligen Fahrzeugs dazu eingerichtet ist, eine Alarmmeldung oder ein Alarmsignal an das Aktivierungssteuermittel (128) zu übertragen, wenn es bestimmt, dass zumindest ein Fahrzeug, das in Reihe mit dem zweiten Leitungsabschnitt (106) des jeweiligen Fahrzeugs verbunden ist, ein lokales Steuermittel (110) aufweist, das nicht operativ ist.

5. System nach einem der vorhergehenden Ansprüche, wobei das lokale Steuermittel (110) jedes jeweiligen Fahrzeugs dazu eingerichtet ist, eine Alarmmeldung oder ein Alarmsignal an ein von dem Konvoi von Fahrzeugen entferntes Steuermittel zu übertragen.

6. System nach einem der vorhergehenden Ansprüche, wobei die Konvoi-Kommunikationsleitung eine Single-Pair-Ethernet-Leitung ist.

7. System nach einem der vorhergehenden Ansprüche, wobei die Konvoi-Kommunikationsleitung (102) redundant ist.

8. System nach einem der vorhergehenden Ansprüche, wobei das lokale Steuermittel (110) jedes jeweiligen Fahrzeugs ein Mittel zum Senden und Empfangen von Signalen oder Meldungen umfasst oder diesem zugeordnet ist;
wobei das Mittel zum Senden und Empfangen von Signalen oder Meldungen umfasst:
- einen ersten Kommunikationsanschluss P1, der dazu eingerichtet ist, mit dem ersten Leitungsabschnitt (104) eines jeweiligen Fahrzeugs verbunden zu werden; und
- einen zweiten Kommunikationsanschluss P2, der dazu eingerichtet ist, mit dem zweiten Leitungsabschnitt (106) des jeweiligen Fahrzeugs verbunden zu werden.

9. System nach einem der vorhergehenden Ansprüche, wobei die Widerstandslast (R) jedes jeweiligen Fahrzeugs und/oder das elektrische Stromerzeugungsmittel (124) jedes jeweiligen Fahrzeugs in einer jeweiligen Rangierschaltung enthalten sind.

10. System nach einem der vorhergehenden Ansprüche, wobei die Stromversorgungsmittel (118), die dazu eingerichtet sind, die in den jeweiligen Fahrzeugen installierten lokalen Steuermittel mit elektrischer Energie zu versorgen, umfassen:
- eine einzige Stromversorgungsquelle, die dazu eingerichtet ist, alle lokalen Steuermittel der Fahrzeuge des Konvois mit elektrischer Energie zu versorgen; und/oder
- eine Vielzahl lokaler Stromversorgungsquellen, wobei jede der lokalen Stromversorgungsquellen dazu eingerichtet ist, in einem jeweiligen Fahrzeug installiert zu werden und das in dem jeweiligen Fahrzeug installierte lokale Steuermittel (110) mit elektrischer Energie zu versorgen.

11. System (100) nach einem der vorhergehenden Ansprüche, wobei jedes in einem jeweiligen Fahrzeug installierte lokale Steuermittel dazu eingerichtet ist:
- zu bestimmen, dass das Fahrzeug, in dem das jeweilige lokale Steuermittel installiert ist, ein Endfahrzeug ist, wenn der gemessene Stromwert (I) null ist.

12. Konvoi von Fahrzeugen, umfassend:
- eine Vielzahl von Fahrzeugen;
- ein System (100) zur Bestimmung der Anwesenheit eines nichtoperativen lokalen Steuermittels in einem Konvoi von Fahrzeugen nach einem der vorhergehenden Ansprüche.

## Revendications

1. Système (100) destiné à déterminer la présence d'un moyen de commande local non opérationnel dans un convoi de véhicules (C) comprenant une pluralité de véhicules (V), en particulier dans un convoi ferroviaire comprenant une pluralité de véhicules ferroviaires;
dans lequel ledit système (100) comprend une ligne de communication de convoi (102) installée dans lesdits véhicules du convoi ;
ladite ligne de communication de convoi (102), pour chaque véhicule, comprend :
- une première section de ligne (104) agencée pour être associée à une première extrémité (A) d'un véhicule respectif ;
- une seconde section de ligne (106) agencée pour être associée à une seconde extrémité (B) dudit véhicule respectif, opposée à ladite première extrémité (A) ;
dans laquelle la seconde section de ligne (106) d'un véhicule est agencée pour être connectée en série à la première section de ligne (104) d'un autre véhicule ;
entre ladite première section de ligne (104) et ladite seconde section de ligne (106) de chaque véhicule respectif, ladite ligne de communication de convoi (102) comprend :
- une section de ligne de commande (108) agencée pour comprendre un moyen de commande local respectif (110) ;
- une section de ligne de dérivation (112) agencée pour être disposée électriquement en parallèle avec ladite section de ligne de commande (108) ;
dans laquelle ladite section de ligne de commande de chaque véhicule respectif comprend une troisième section de ligne (114) et une quatrième section de ligne (116) ; le moyen de commande local (110) de chaque véhicule respectif compris dans la section de ligne de commande (108) est agencé pour être connecté à la troisième section de ligne (114) et à la quatrième section de ligne (116) dudit véhicule respectif, de sorte qu'il fait face à la troisième section de ligne sur un premier côté et à ladite quatrième section de ligne sur un second côté ;
pour chaque véhicule respectif, ladite ligne de communication de convoi (102) comprend en outre :
- un premier moyen de commutation (120) et un second moyen de commutation (122) ;
dans lequel ledit premier moyen de commutation (120) est agencé pour :
- assumer normalement un premier état dans lequel il permet la connexion de la première section de ligne (104) à la section de ligne de dérivation (112) dudit véhicule respectif ;
- assumer un second état dans lequel il permet la connexion de la première section de ligne (104) à la troisième section de ligne (114) de ladite section de ligne de commande (108) dudit véhicule respectif ;
dans lequel ledit second moyen de commutation (122) est agencé pour :
- assumer normalement un premier état dans lequel il permet la connexion de la seconde section de ligne (106) à la section de ligne de dérivation (112) dudit véhicule respectif ;
- assumer un second état dans lequel il permet la connexion de la seconde section de ligne (106) à la quatrième section de ligne (116) de ladite section de ligne de commande (108) dudit véhicule respectif ;
dans lequel le système (100) comprend un moyen d'alimentation électrique (118) agencé pour fournir une alimentation électrique aux moyens de commande locaux respectifs (110) installés dans les véhicules ;
le système (100) comprenant en outre, pour chaque véhicule respectif :
- une charge résistive (R) agencée pour être connectée à la première section de ligne (104) dudit véhicule respectif et présentant une valeur de résistance prédéterminée ;
- un moyen de génération de puissance électrique (124) agencé pour fournir une valeur de tension prédéterminée à ladite seconde section de ligne (106) dudit véhicule respectif ;
- un troisième moyen de commutation (126) ;
ledit troisième moyen de commutation (126) de chaque véhicule respectif étant agencé pour :
- assumer normalement un premier état dans lequel il empêche la fourniture de la valeur de tension prédéterminée depuis le moyen de génération de puissance électrique (124) dudit véhicule respectif vers la seconde section de ligne (106) dudit véhicule respectif ;
- assumer un second état dans lequel il permet la fourniture de la valeur de tension prédéterminée depuis le moyen de génération de puissance électrique (124) dudit véhicule respectif vers la seconde section de ligne (106) dudit véhicule respectif ;
le système (100) comprenant en outre :
- un moyen de commande d'activation (128) agencé pour être installé dans un véhicule de ladite pluralité de véhicules ;
- une ligne d'activation (130) agencée pour connecter ledit moyen de commande d'activation (128) aux moyens de commande locaux respectifs (110) des véhicules du convoi;
ledit moyen de commande d'activation (128) étant agencé pour transmettre un signal d'activation aux moyens de commande locaux respectifs (110) des véhicules ;
chaque moyen de commande local installé dans un véhicule respectif, en réponse à la réception du signal d'activation et lorsqu'il est alimenté par le moyen d'alimentation électrique, est agencé pour :
- amener le premier moyen de commutation (120) dudit véhicule respectif à assumer le second état permettant la connexion de la première section de ligne (104) dudit véhicule respectif à la troisième section de ligne (114) de ladite section de ligne de commande (108) dudit véhicule respectif ;
- amener le second moyen de commutation (122) dudit véhicule respectif à assumer le second état qui permet la connexion de la seconde section de ligne (106) dudit véhicule respectif à la quatrième section de ligne (116) de ladite section de ligne de commande (108) dudit véhicule respectif ;
- amener le troisième moyen de commutation (126) dudit véhicule respectif à assumer le second état permettant la fourniture de la valeur de tension prédéterminée depuis le moyen de génération de puissance électrique (124) vers la seconde section de ligne (106) dudit véhicule respectif ;
- mesurer une valeur de courant (I) fournie par le moyen de génération de puissance électrique (124) à ladite seconde section de ligne (106) dudit véhicule respectif ;
- déterminer qu'au moins le véhicule directement connecté en série à la seconde section de ligne (106) dudit véhicule respectif comporte un moyen de commande local (110) qui n'est pas opérationnel, en fonction de la valeur de courant mesurée, de la valeur de tension prédéterminée fournie par le moyen de génération de puissance électrique (124) dudit véhicule respectif et de la valeur de résistance prédéterminée des charges résistives (R).

2. Système selon la revendication 1, dans lequel le moyen de commande local (110) de chaque véhicule respectif est agencé pour déterminer qu'au moins le véhicule directement connecté en série à la seconde section de ligne (106) dudit véhicule respectif comporte un moyen de commande local (110) qui n'est pas opérationnel, lorsque la valeur de courant mesurée (I) est indicative du fait qu'au moins deux charges résistives (R) présentant ladite valeur de résistance prédéterminée sont connectées à la seconde section de ligne (106) dudit véhicule respectif.

3. Système selon la revendication 1 ou 2, dans lequel le moyen de commande local (110) de chaque véhicule respectif est agencé pour déterminer combien de véhicules connectés en série à la seconde section de ligne (106) dudit véhicule respectif comportent un moyen de commande local (110) qui n'est pas opérationnel, en fonction du nombre de charges résistives (R) présentant ladite valeur de résistance prédéterminée connectées à la seconde section de ligne (106) dudit véhicule respectif ;
le nombre de charges résistives (R) présentant ladite valeur de résistance prédéterminée connectées à la seconde section de ligne électrique (106) dudit véhicule respectif étant déterminé en fonction de la valeur de courant mesurée (I), de la valeur de tension prédéterminée fournie par le moyen de génération de puissance électrique (124) dudit véhicule respectif et de la valeur de résistance prédéterminée des charges résistives (R).

4. Système selon l'une quelconque des revendications précédentes, dans lequel le moyen de commande local (110) de chaque véhicule respectif est agencé pour transmettre un message d'alarme ou un signal d'alarme au moyen de commande d'activation (128) lorsqu'il détermine qu'au moins un véhicule connecté en série à la seconde section de ligne (106) dudit véhicule respectif comporte un moyen de commande local (110) qui n'est pas opérationnel.

5. Système selon l'une quelconque des revendications précédentes, dans lequel le moyen de commande local (110) de chaque véhicule respectif est agencé pour transmettre un message d'alarme ou un signal d'alarme à un moyen de commande distant du convoi de véhicules.

6. Système selon l'une quelconque des revendications précédentes, dans lequel ladite ligne de communication de convoi est une ligne Ethernet à paire unique.

7. Système selon l'une quelconque des revendications précédentes, dans lequel ladite ligne de communication de convoi (102) est redondante.

8. Système selon l'une quelconque des revendications précédentes, dans lequel le moyen de commande local (110) de chaque véhicule respectif comprend ou est associé à un moyen d'émission et de réception de signaux ou de messages ;
ledit moyen d'émission et de réception de signaux ou de messages comprenant :
- un premier port de communication P1 agencé pour être connecté à la première section de ligne (104) d'un véhicule respectif ; et
- un second port de communication P2 agencé pour être connecté à la seconde section de ligne (106) dudit véhicule respectif.

9. Système selon l'une quelconque des revendications précédentes, dans lequel la charge résistive (R) de chaque véhicule respectif et/ou le moyen de génération de puissance électrique (124) de chaque véhicule respectif sont inclus dans un circuit de fretting respectif.

10. Système selon l'une quelconque des revendications précédentes, dans lequel le moyen d'alimentation électrique (118) agencé pour fournir une alimentation électrique aux moyens de commande locaux installés dans les véhicules respectifs comprend :
- une source d'alimentation unique agencée pour fournir une alimentation électrique à tous les moyens de commande locaux des véhicules du convoi ; et/ou
- une pluralité de sources d'alimentation locales, chacune desdites sources d'alimentation locales étant agencée pour être installée dans un véhicule respectif et pour fournir une alimentation électrique au moyen de commande local (110) installé dans ledit véhicule respectif.

11. Système (100) selon l'une quelconque des revendications précédentes, dans lequel chaque moyen de commande local installé dans un véhicule respectif est agencé pour:
- déterminer que le véhicule dans lequel ledit moyen de commande local respectif est installé est un véhicule de queue lorsque la valeur de courant mesurée (I) est nulle.

12. Convoi de véhicules comprenant :
- une pluralité de véhicules ;
- un système (100) destiné à déterminer la présence d'un moyen de commande local non opérationnel dans un convoi de véhicules selon l'une quelconque des revendications précédentes.
